# EUROPEAN PATENT SPECIFICATION

(11) **EP 2 529 455 B1**
(45) Date of publication and mention of the grant of the patent: **26.11.2014**
(21) Application number: 10843794.8
(22) Date of filing: 25.01.2010
(51) Int. Cl.: F16L 1/16, F16L 1/20, F16L 1/12, H02G 1/10, B63B 35/04, B66D 1/74, F16L 1/235

(54) **DAMAGE PREVENTION IN SUBSEA CABLES AND SIMILAR ELEMENTS DURING LAYING OR RETRIEVING**
SCHADENSPRÄVENTION BEI UNTERWASSERKABELN UND ÄHNLICHEN ELEMENTEN WÄHREND DER VERLEGUNG ODER AUFWICKLUNG
PRÉVENTION DES DOMMAGES AUX CÂBLES SOUS-MARINS ET ÉLÉMENTS SIMILAIRES PENDANT LEUR POSE OU LEUR RÉCUPÉRATION

(43) Date of publication of application: 05.12.2012
(73) Proprietor: Octio AS, 5057 Bergen (NO)
(72) Inventor: OLDERVOLL, Magne, N-5200 Os (NO)
(74) Representative: Johansson, Lars E.
(86) International application number: PCT/IB2010/050315
(87) International publication number: WO 2011/089479

(56) References cited:
- EP-A1- 0 499 106
- FR-A5- 2 171 483
- GB-A- 355 002
- GB-A- 802 732
- GB-A- 1 540 650
- US-A- 3 132 844
- US-A- 4 714 380
- US-A- 5 580 187
- US-A- 5 906 325
- US-A- 5 906 325

## Description

### TECHNICAL FIELD

The present invention relates to a method of preventing damage in an elongate flexible element having an accessory integral with the element and forming therewith a section that risks being damaged on passing from a generally horizontal/vertical orientation to a generally vertical/horizontal one during subsea laying or retrieving of the element.

The invention also relates to a support structure for an elongate flexible element having an accessory integral with the element and forming therewith a section that risks being damaged on passing from a generally horizontal/vertical orientation to a generally vertical/horizontal one during subsea laying or retrieving of the element.

The term "element" as used herein is intended to encompass subsea elements such as seabed pipes and cables, such as seismic cables, for example, which have sensor modules distributed rather densely along the cable. Such sensor modules form an example of an accessory that is integral with the elongate flexible element, but the accessories are not restricted to such sensor modules.

### BACKGROUND ART

Different technologies for deploying and retrieving subsea cables to the seabed exist. The general concept for deployment is either a linear traction unit or a winch. In the first case, cable from a cable storage is fed by a traction unit over an overboard unit, where the cable changes direction from horizontal to vertical. As an example, the traction unit may comprise a series of driven wheel or belt nips, and the overboard unit may be a simple wheel that changes the feed direction of the cable. In the second case, the cable is stored on a winch, from which it is spooled out by a drive motor.

There is a wide range of technologies used in cable deployment. The cable can either be spooled out from a winch or drum, or it can be supplied from a storage container or a rotary table (carousel). For short and/or thin cables the winch alternative is often used, but for lager cables this is normally not a good solution. For big power cables and long telecom cables it is common practice to store the cable on a "carousel".

The cable tension can be controlled by a linear traction machine or a capstan, or if the cable is deployed from a winch, the winch could be used to control the tension and hold back the cable. The traction machines are often based on wheels or belts squeezing on the outside of the cable. This can be a problem if the cable is of a fragile design, or contains fragile components such as sensor modules or connectors. Also if the cable is deployed from a winch, and the tension is high, there can be damages to a fragile cable or module.

To get the cable from the horizontal plane onboard the vessel, to the vertical plane in the water column it is common practice to run the cable over a sheave-wheel or a chute at the stern or side of the vessel. If the system to be deployed only contains cable, without any stiff modules like sensor modules or connectors integrated into the cable, this is simple and acceptable way to do the deployment. The problem occurs when there is a stiff unit integrated in the cable, because then the cable gets a sharp bend or kink where it enters the stiff unit. This may destroy the cable, as it is designed with a minimum bend radius, and this kink is far sharper than permitted by the minimum bend radius. Often this problem is solved to some extent by adding bend restrictors at each end of the stiff module. The problem may also be reduced by increasing the diameter of the wheel compared to the length of the unit. However, this will only reduce the problem, not eliminate it.

US 4,714,380 discloses various mechanisms for lifting an elongate flexible element, which has an accessory that is integral with the element and forms therewith a stiff section, up from the periphery of the direction changing wheel in order to increase the bend radius. A conventional device for linear traction of the element, e.g. opposed caterpillar tracks, is controlled to avoid tension in the element between the traction device and the lifting mechanism, so that a bend in the element, where the element exits the accessory, will be smooth.

A similar concept but more elaborated is disclosed in US 5,580,187. Here, two curved conveyors are substituted for the direction changing wheel to give a larger radius of curvature. A trolley for supporting the accessory, so that the element at each end of the accessory is not subject to bending, is movable along the curved conveyors.

However, also these two concepts will only reduce the problem, not eliminate it.

In EP0499106 there is described a method and an apparatus for paying out or hauling in the supply line of an underwater cable device. However, this equipment is not suitable for continuous deployment/retrieval of heavy cable and deep water where the tension in the cable can be several tons.

### SUMMARY OF THE INVENTION

The object of the present invention is to eliminate the risk of damaging the elongate flexible element and/or its integrated accessory on passage thereof over a direction changing support structure.

In a method of the kind referred to in the first paragraph above, this object is achieved in accordance with the invention by carrying out the following steps:
a) providing a support structure including at least **four** rotary sheaves and a rotary support frame for carrying the sheaves, **and spacing said sheaves equidistantly from the rotational axis of the rotary frame and equiangularly from one another,** said at least **four** sheaves being spaced from each other a distance that is greater than a length of the accessory to permit the element with the integral accessory to extend in a straight line between **two of** the **four** sheaves, each sheave having a rotational axis that is substantially parallel to a rotational axis of the support frame,
b) feeding the element to a position where it is carried by **two of** said at least **four** sheaves and the integral accessory is located between **two of** said **four** sheaves;
c) rotating the support frame **a quarter of a full turn** to make the accessory change from a generally horizontal/vertical orientation to a generally vertical/horizontal one while maintaining the location of the accessory between the sheaves; and
d) continuing feeding the element to make the accessory leave the position between the sheaves, whereby the accessory and adjacent sections of the element have changed their orientation during rotation of the support frame a quarter of a full turn without having been exposed to damaging bends.

Similarly, the object is also achieved in a support structure of the kind referred to in the second paragraph above, in that said support structure comprises at least **four** rotary sheaves and a rotary support frame for carrying the sheaves, **said sheaves being equidistantly spaced from the rotational axis of the rotary frame and equiangularly spaced from one another,** said at least **four** sheaves being spaced from each other a distance that is greater than a length of the accessory to permit the element with the integral accessory to extend in a straight line between the two **of the four** sheaves, each sheave having a rotational axis that is substantially parallel to a rotational axis of the support frame, and the support frame being rotary at least between a position in which the accessory with associated ends of the element is located in a generally horizontal orientation and is supported by said sheaves and a position in which the accessory with associated ends of the element is located in a generally vertical orientation during continuous support by said sheaves.

Thus, both the method and the support structure of the present invention make it possible to change the orientation of the accessory and adjacent sections of the element from generally horizontal to generally vertical, when laying an elongate flexible subsea element or from generally vertical to generally horizontal when retrieving the element, without exposing the accessory and adjacent sections of the element to damaging bends.

In the present context, the term "sheave" is used to designate a wheel or roller with a groove along its edge for guiding a cable or similar elongate flexible element while changing the running direction of the cable or other element.

Even though the support structure will work in the intended manner when having only two rotary sheaves, the support structure advantageously comprises more than two rotary sheaves, preferably four sheaves, that are carried by the rotary support frame, and the sheaves are equidistantly spaced from the rotational axis of the rotary frame and equiangularly spaced from one another. Thus, in an embodiment with four sheaves, they are located at the corners of a square.

In a preferred embodiment, the support structure is part of an overboard unit. Then, the sheaves have a circumferential groove fitting the element that engages the sheave, the sheaves and the support frame can rotate freely, a tensioning unit is provided upstream of the support structure to keep a desired tension in the element, and a locking system is provided for preventing the support frame to rotate when it should not.

If desired, arcuate rows of wheels provided with circumferential grooves may be substituted for large diameter sheaves.

In another preferred embodiment, the support structure is part of a combined overboard unit and traction unit. Then, the sheaves have a circumferential groove giving place for more than one single element to engage the sheave, and the support frame and all of the sheaves are motor driven, the support frame and all of the sheaves each have a separate motor, and the motors are individually controlled. The element carried by the sheaves is wrapped around the support frame one or more times. Preferably, a guiding system for the element is provided on the circumference of the sheaves for moving the element from one side of the support frame to the other as the sheaves rotate, so as to prevent the element from getting tangled up at one side of the support frame.

Further details characterizing the present invention will be disclosed below.

### BRIEF DESCRIPTION OF THE DRAWINGS

In the following, the invention will be described in more detail with reference to preferred embodiments and the appended drawings.
- Fig. 1: is a schematic side view of a ship for laying an elongate flexible subsea element with integrated accessories, e.g. a seismic cable with sensor modules, said ship having a support structure for changing the orientation of the cable during laying from generally horizontal to generally vertical.
- Fig. 2: is a side view of the support structure of Fig. 1 of an overboard unit and comprising a support frame and rotary sheaves in accordance with a preferred embodiment of the present invention.
- Fig. 3: is an end view of the support structure of Fig. 2.
- Figs. 4a to 4d: is a sequence of side views of the overboard unit in operation, with the flexible element passing the support structure of Fig. 2 and
a) showing an integrated accessory arriving at the support frame,
b) showing the accessory and adjacent parts of the element located between and carried horizontally by the two upper sheaves,
c) showing the support frame rotated an eighth of a full turn, and
d) showing the support frame having completed a quarter of a full turn, so that the accessory is carried vertically and just has left its position between the sheaves.

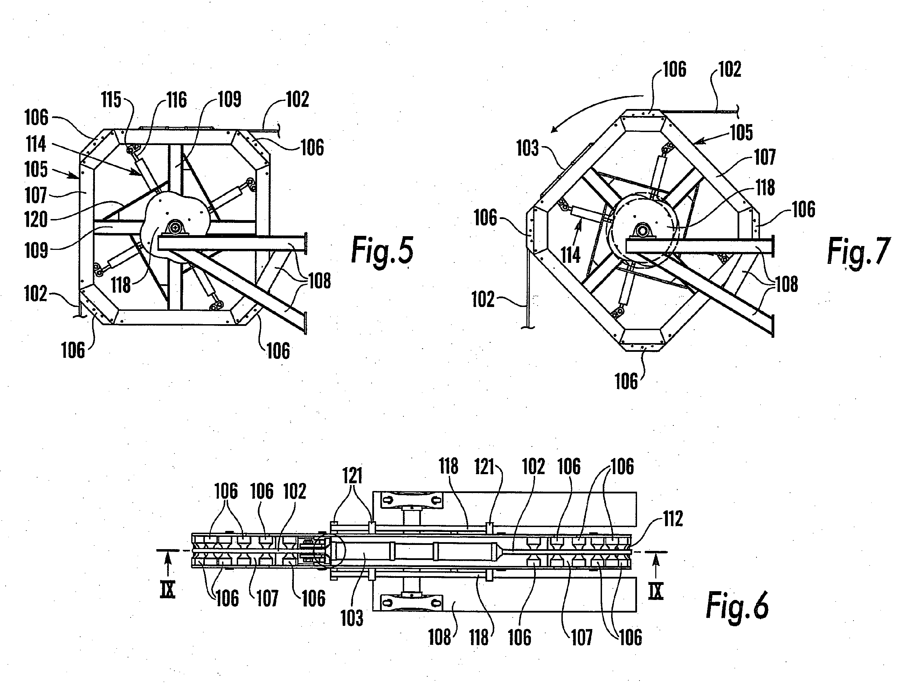

- Fig. 5: is a side view of an alternative preferred embodiment an overboard unit of the present invention and comprising a support frame and roller-shaped rotary sheaves, the support frame being shown in a first locked position with a just arrived horizontal integrated accessory, a locking system including a cam wheel being provided for preventing the support frame from rotating when it should not.
- Fig. 6: is a top view of the overboard unit of Fig. 5 showing inter alia the series of roller-shaped sheaves.
- Fig. 7: is a side view of the overboard unit of Fig. 5 with the support frame shown in a position midway between a first locked position for horizontal receipt of the arriving integrated accessory, and a second locked position for vertical delivery of the integrated accessory.

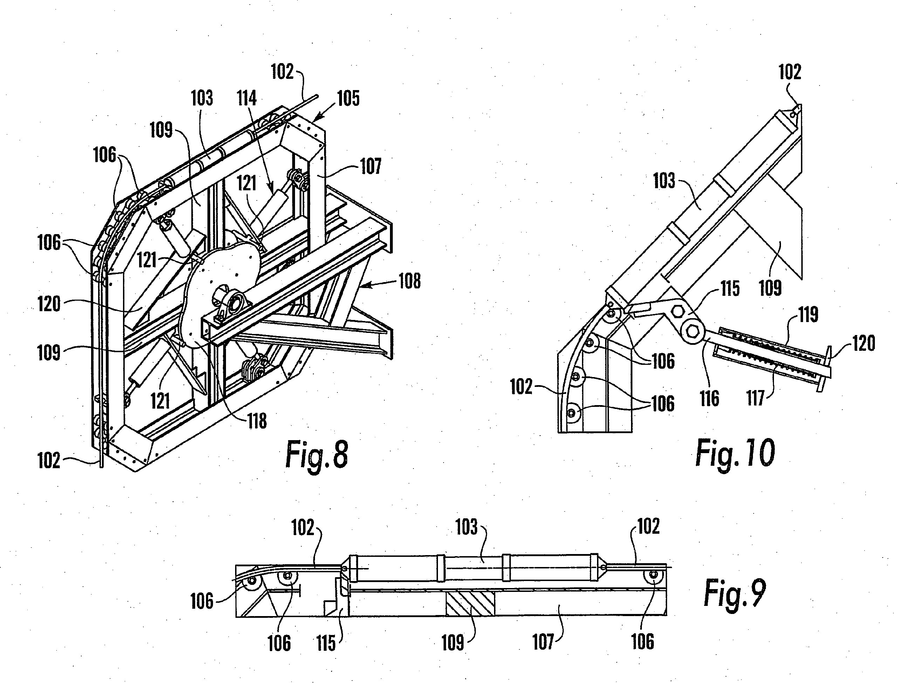

- Fig. 8: is a perspective view of the overboard unit of Fig. 5.
- Fig. 9: is a sectional side view of part of the top portion of the support frame of Fig. 5 on a larger scale taken along line IX-IX of Fig. 6 and shows the horizontal integrated accessory arriving at and engaging a pivotal hook included in the locking system.
- Fig. 10: is a sectional side view of part of the top portion of the support frame on a larger scale after rotation to the position shown in Fig. 7 and shows the horizontal integrated accessory having swung the pivotal hook of the locking system aside, so that the support frame can continue rotating to a subsequent locked position, where the integrated accessory is vertical.

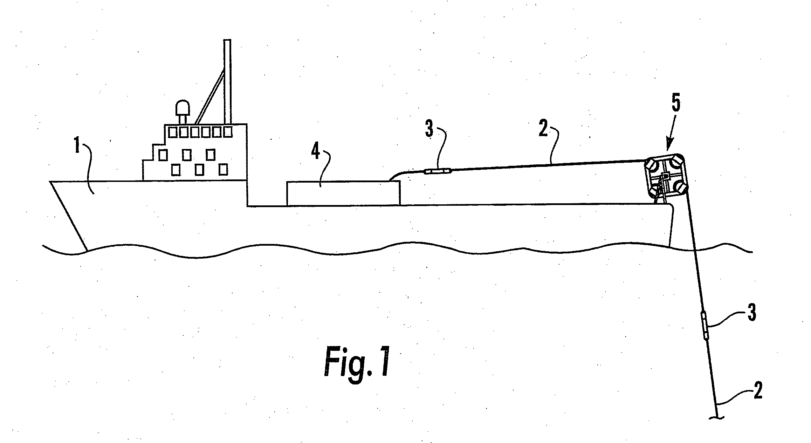

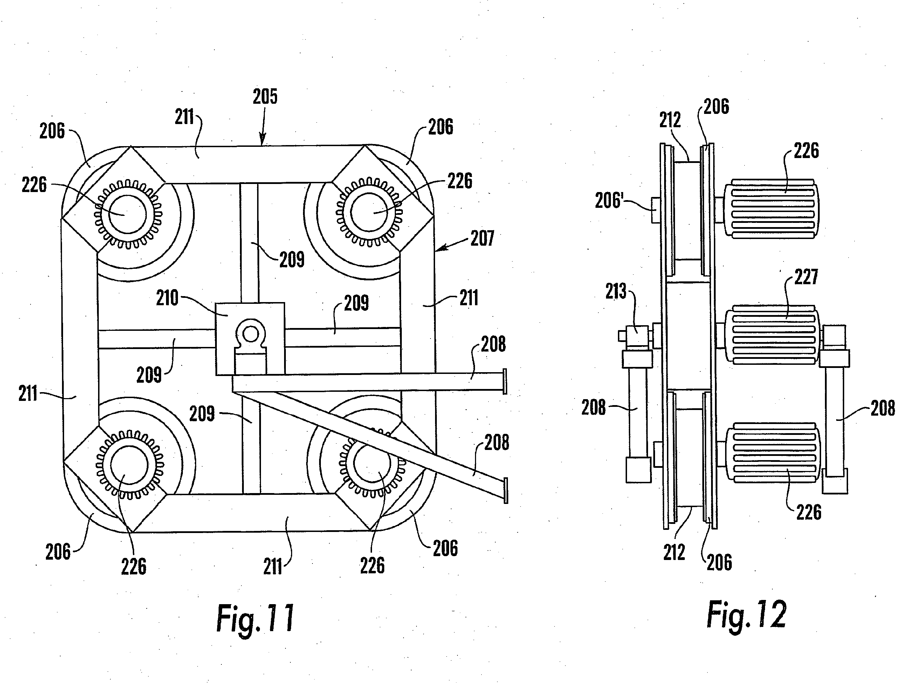

- Fig. 11: is a side view of the support structure of Fig. 1 of a combined overboard unit and traction unit and comprising a support frame and rotary sheaves in accordance with another preferred embodiment of the present invention.
- Fig. 12: is an end view of the support structure of Fig. 11.

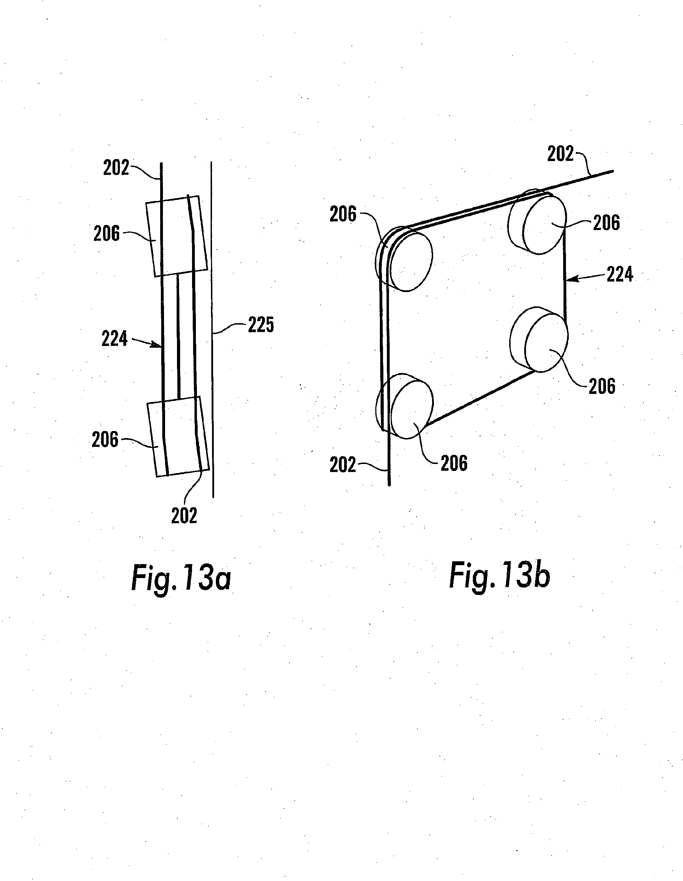

- Figs. 13a and 13b: is a schematic top view and perspective view, respectively, of a guiding system for the element to permit the element to extend more than one full turn around the support frame while preventing the element from getting tangled up at one side of the support frame.

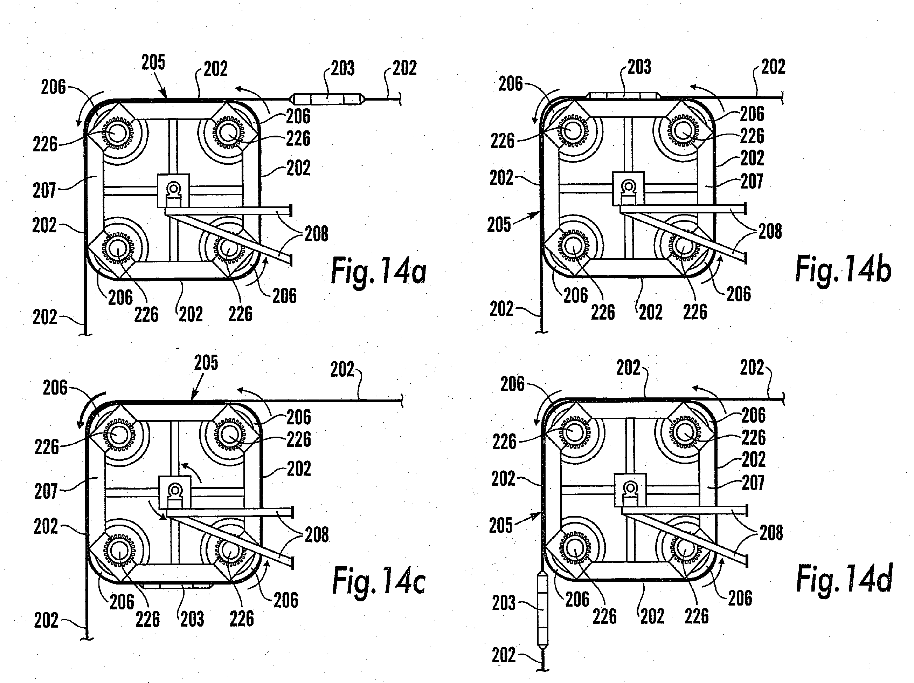

- Figs. 14a to 14d: is a sequence of side views of the combined overboard unit and traction unit in operation, with the flexible element wrapped around the support frame of Fig. 11 and
a) showing an integrated accessory arriving at the support frame,
b) showing the accessory and adjacent parts of the element located between and carried horizontally by the two upper sheaves,
c) showing the support frame rotated a half of a full turn, and
d) showing the support frame having completed one and a quarter of a full turn, so that the accessory is carried vertically and just has left its position between the sheaves.

### MODE(S) FOR CARRYING OUT THE INVENTION

Fig. 1 is a schematic side view of a ship **1** for laying and retrieving an elongate flexible subsea element **2** with integrated accessories **3**. The elongate flexible subsea element may be a seabed pipe or a cable, such as a seismic cable, for example, which has sensor modules distributed rather densely along the cable. Such sensor modules form an example of an accessory that is integral with the elongate flexible element, but the accessories are not restricted to such sensor modules. Another example is a connector. The cable **2** or other elongate flexible element is supplied from a supply device **4,** which includes either a storage container or a rotary table (carousel), or alternatively a winch or drum. For short and/or thin cables the winch alternative is often used, but for thick cables this is normally not a good solution. For heavy power cables and long telecom cables it is common practice to store the cable on a carousel.

The supply device **4** also includes either a linear traction unit or a winch. In the first case, cable from the cable storage is fed by the traction unit over a support structure **5,** where the cable changes direction from horizontal to vertical. As an example, the traction unit may comprise a series of driven wheel nips or belt nips, while in the second case the cable is stored on a winch, from which it is spooled out by a drive motor. The traction machines are often based on wheels or belts squeezing on the outside of the cable. This can be a problem if the cable is of a fragile design, or contains fragile components such as sensor modules or connectors.

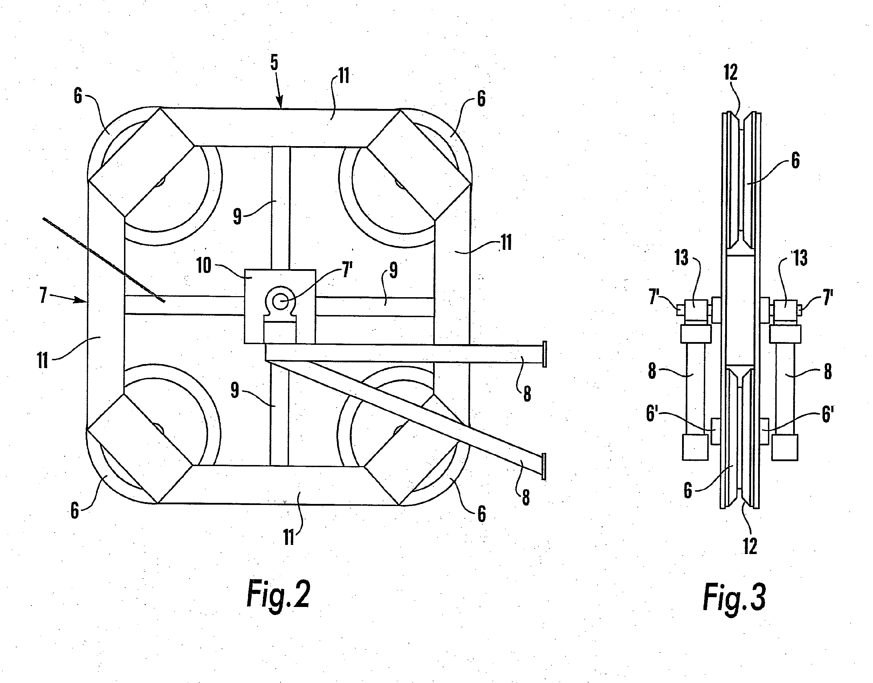

Fig. 2 is a side view on an enlarged scale of the support structure **5 shown** in Fig. 1, where it is an overboard unit. In accordance with a preferred embodiment of the present invention it comprises at least two rotary sheaves **6** and a rotary support frame 7 for carrying the sheaves. The at least two sheaves are spaced from each other a distance that is greater than a length of the accessory **3** to permit the element **2** with the integral accessory to extend in a straight line between the two sheaves **6,** and each sheave has a rotational axis **6'** that is parallel to a rotational axis **7'** of the support frame **7.** A bracket **8** is mounted to the stern of the ship **1** for carrying the rotary support frame **7.** The sheaves **6** have an effective radius of curvature that is larger than the minimum permissible bend radius of the element **2.**

The support frame **7** is rotary at least between a first position in which the accessory **3** with associated ends of the element **2** has a generally horizontal orientation and is supported by the at least two sheaves **6,** and a second position in which the accessory **3** with associated ends of the element **2** has a generally vertical orientation. During the rotation of the support frame 7, the accessory **3** does not move in relation to the at least two sheaves and it is continuously supported by the sheaves **6.**

In a simple embodiment, not shown, the support frame **7** may be a straight arm. The two sheaves **6** are located at the ends of the arm, and the arm can rotate around its center. Then, the bracket **8** has to project rearward from the stern of the ship 1 to permit to permit the arm to rotate a quarter of a full turn from a generally horizontal orientation to a generally vertical one, or the other way around. After having made the quarter of a full turn and delivered the stiff section, the arm swings back to its original position for receiving the next stiff section and repeating the action. Instead of being straight, the arm may be angular, and the two halves of the arm may form a straight angle, for example, between them.

In another embodiment, not shown, two identical arms having rotary sheaves at their ends may cross each other perpendicularly to form a substantially square rotary support frame having the sheaves located in the corners of the square. Of course, to make the support frame sufficiently stable, the two arms may have to be interconnected by struts.

A preferred embodiment of a support frame **7** having four sheaves **6** located at the corners of a square is shown in Fig. 2. Here, the support frame **7** has four spokes **9** extending between a hub **10** and a surrounding generally square frame **11.** The very corners of the square are beveled to give the support frame **7** an octagonal shape, and the four rotary sheaves **6** are mounted at the beveled corners. In all of the embodiments described above, the sheaves **6** are, according to the invention, equidistantly spaced from the rotational axis of the rotary frame **7** and equiangularly spaced from one another. In this design, all rotations of the support frame **7** a quarter of a full turn will be in the same direction, not back to its previous position, and the bracket **8** does not have to project rearward from the stern of the ship **1.** Fig. 3 is an end view of the support structure of Fig. 2. As shown, the sheaves **6** are provided with a circumferential groove **12** fitting the element **2** that engages the sheave. Further, it is clear that the rotary support frame **7** is mounted in bearings **13** carried by a forked end of the bracket **8.**

As disclosed above, the support frame **7** can rotate around its own center, and the sheaves **6** at the corners of the frame can rotate freely. There is also a locking system keeping the support frame **7** from rotating when it should not. It can be made as a pure mechanical device, or it can be an electrical or hydraulic system. This system will require a traction unit to hold the cable tension. This is not shown in the figure, but it could be a conventional linear traction unit or a capstan, placed in front of the overboard unit. A mechanical locking system will be described in the following in connection with Figs 5-10.

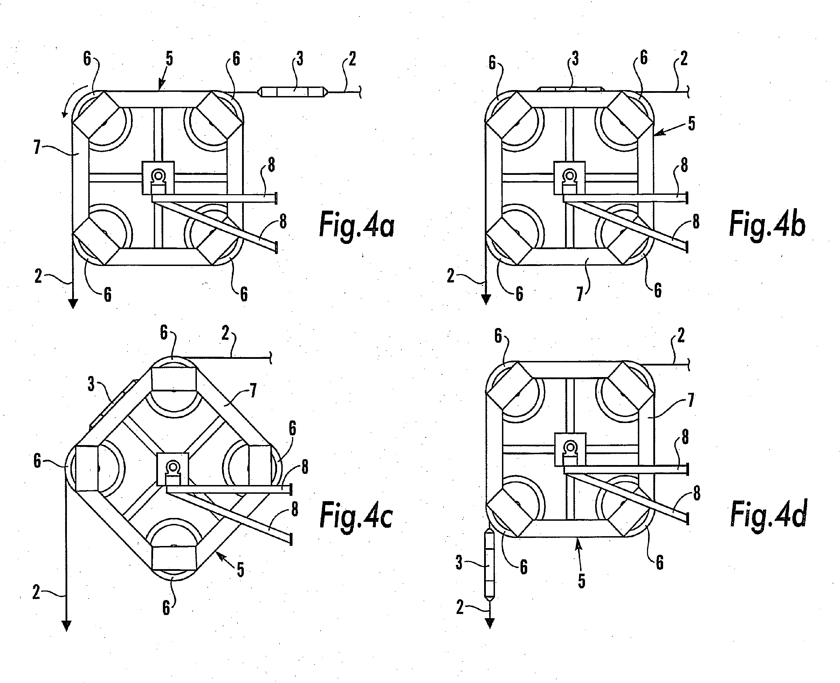

Figs. 4a to 4d is a sequence of side views of the overboard unit in operation, with the flexible element **2** passing the support structure **5** of Fig. 2. When the element **2,** without any stiff accessories **3,** is laid, it passes over the overboard unit as shown in Fig. 4a. The element **2** rolls over the upper left sheave **6,** and the support frame **7** is kept from rotating by the locking system. Only the friction force in the sheave **6** will try to rotate the support frame **7,** all other forces are balanced, and the force needed to keep the support frame **7** from rotating is small.

When a stiff module or other accessory **3** reaches the overboard unit, it will get to a position halfway between the two upper sheaves **6,** as shown in Fig. 4b. At this point the locking system is released, and the support frame **7** can rotate freely with no relative movement between the element **2** and the support frame **7.** Additional functions, not shown, can lock the accessory **3** to the support frame **7** to avoid slippage. The result will be that the support frame **7** rotates with the element **2,** and the stiff module or other accessory **3** is protected from any bending forces as shown in Fig. 4c.

When the support frame **7** has rotated about a quarter of a full turn, the locking system is engaged again, preventing the support frame **7** from rotating any more. The element **6** now can continue rolling over the upper left-hand wheel in Fig. 4d until the next stiff module or other accessory **6** arrives at the overboard unit.

An alternative preferred embodiment of the support structure of the present invention is shown in Figs. 5 to 10. In view of the similarities between the embodiment of Figs. 5-10 and that of Figs. 2-4, in principle only the differences will be described, and basically the same reference numerals will be used but chosen from the 100-series. As an example, the support structure **5** in the embodiment of Figs. 2-4 will be referred to as support structure **105** in the embodiment of Figs. 5-10.

Thus, Fig. 5 is a side view of the support structure **105** of Fig. 1 of an overboard unit, and it comprises a generally square support frame **107** and four rotary sheaves **106,** one at each corner of the square. A first difference is that the rotary sheaves here are roller-shaped and preceded by and followed by additional roller-shaped sheaves **106,** which together form an arcuate path for the element **102,** which path has a radius of curvature that is of the same size as the radius of a single sheave of larger diameter carried by the rotary support frame **107** would have, if provided. Thus, the arcuate path formed by the roller-shaped sheaves **106** is identical to the circle arc of a 90 degree sector of a sheave **6** in the embodiment of Figs. 2-4. The preferred shape of the roller-shaped sheaves **106** is best shown in Fig. 6.

A second difference is that the support structure **105** is provided with a system for locking the support frame **107** in various desired positions. Many rotation preventing systems, mechanical or not, are conceivable for a skilled art worker, but in the embodiment shown in Figs. 5-10, the rotation locking system is generally designated **114** and comprises four sets of a two-armed pivotal hook **115,** a push-rod **116,** a spring **117,** and a central non-rotary cam wheel **118** common to all sets. As best shown in Fig. 10, the pivotal hook **115** has two ends, one of which is shaped for engagement with a forward end of the arriving generally horizontal integral accessory **103.** The push rod **116** has one end pivotally connected to the other end of the hook **115** and extends from there toward the rotational axis of the support frame **107.** The cam wheel **118** has a cam surface including four equidistantly and equiangularly spaced cam tops and intermediate valleys and is coaxial with the support frame **107** but is fixed and does not rotate.

The spring **117** is either a compression spring or a tension spring, and it is arranged to press the other end of the push-rod **116** against the cam surface provided on the cam wheel **118.** In the embodiment shown in Figs. 5-10, two identical cam wheels **118** are used, one on each side of the support frame **107** but not connected thereto, and the push rod **116** has a T-shaped end **121** (best shown in Figs. 6 and 8) that engages the cam surfaces on both of the cam wheels **118.** Further, the spring **117** is surrounded by a housing **119** (best shown in Fig. 10) standing on a support member **120** extending at a substantially right angle to the push rod **116** and from one spoke **109** to another. In Fig. 5, the support frame **107** is shown in a first locked position, and a forward end of a just arrived horizontal accessory **103** is stopped by the hook **115** as is best shown in Fig. 9. When the pulling force from the elongate flexible element **102** causes the rotary support frame **107** to rotate, the push rod **116** goes from a cam top to an adjacent valley and thereby swings the hook **115** out of locking engagement with forward end of the accessory **103.** After rotation of the support frame **107** an eighth of a full turn from the locked position shown in Fig. 5, it is in the free position shown in Fig. 7, and the push rod **116** is at the bottom of the cam valley, and the integral accessory **103** has moved forward to the roller shaped sheave **106** in front as is best shown in Fig. 10. A continued rotation another eighth of a full turn will bring the support frame **107** to a position where it again becomes locked against further rotation and the accessory **103** is permitted to leave the support frame **107** in a generally vertical direction. Then, the elongate flexible element **102** can be pulled freely over the direction changing locked support structure **105** until the next integral accessory **103** arrives. A reason for the locking effect is that the friction in the bearings of the roller-shaped sheaves during deployment of a cable or other elongate flexible element is smaller than the combined friction of the support frame bearings and of the push rods that move axially and slide on the cam wheels.

A different alternative can be an electrically operated locking system, not shown. This will have an electric sensor, which detects when an integral accessory **103** gets into the support frame **107** and then releases an electrically operated lock. When the support frame **107** has rotated 90 degrees, other detectors will sense this and turn the lock on again.

An alternative preferred embodiment of the support structure of the present invention is shown in Figs. 11 to 15. In view of the similarities between the embodiment of Figs. 11-15 and that of Figs. 2-4, in principle only the differences will be described, and basically the same reference numerals will be used but chosen from the 200-series. As an example, the support structure **5** in the embodiment of Figs. 2-4 will be referred to as support structure **205** in the embodiment of Figs. 11-15.

Thus, Fig. 11 is a side view of the support structure **205** of Fig. 1 of a combined overboard unit and traction unit, and it comprises a support frame **207** and rotary sheaves **206,** and Fig. 12 is an end view of the support structure of Fig. 11. A first difference is that every one of the four sheaves **206** is equipped with a motor **226** for driving it. Also the support frame **207** itself is rotated by a motor **227.** The profile of the sheaves **206** is also different, in that the circumferential groove **212** has a flat bottom and gives room for more than one single element **202** to pass the sheave **206**.

There is also a guiding system for moving the element **202** in the grooves **212** of the sheaves **206** from one side to the other of the support frame **207** as the sheaves **206** rotate, so as to permit the element **202** to extend more than one full turn around the support frame **207** while preventing the element **202** from getting tangled up at one side of the support frame **207.** Various guiding systems may be used, but a simple one, generally designated **224,** is schematically shown in Figs. 13a and 13b. As shown in the top view of Fig. 13a, the rotary sheaves **206** are located in such a manner that their rotational axes are parallel to one another but form an angle close to but deviating from 90 degrees with a vertical plane **225** through identically located points of the four sheaves **206** in the combined overboard and traction unit. The vertical plane **225** is parallel to the rotational plane of the support frame **207.** Every time the elongate flexible element **202** bends over anyone of the sheaves **206,** it is moved sideways. In Figs. 13a and 13b, the skew is exaggerated for illustration purposes.

The motors **226** and **227** that are used to control the sheaves **206** and the support frame **207** will typically be electric motors with individual control system for each. The control system will control the rotational speed and tension of the sheaves **206** and the support frame **207.** To provide power and control signals to the sheave motors **226,** a slip ring may be included in the support frame **207.** Preferably, a common AC power is supplied over the slip rings to the four motors **226,** whereas the last motor **227** may be powered directly, without going through the slip ring. Preferably there is a distribution and control unit mounted on the support frame **207.** All of this is standard, off the shelf technology, and should not require a detailed description.

Figs. 14a to 14d is a sequence of side views of the combined overboard and traction unit in operation, with the flexible element **202** passing the support structure **205** of Fig. 11 The flexible element **202** is wrapped around the support frame **207** one or more times. In a situation when only the flexible element **202** is deployed, this is done by breaking the support frame **207** to hold it still and simultaneously rotating the sheaves **206.** By controlling the tension on each sheave **206,** the load is distributed to multiple points on the flexible element **202,** and by that the flexible element **202** is less exposed to damage.

When a stiff module or other accessory **203** gets into the position midway between the two upper sheaves **206** in Fig. 15b, the sheaves **206** will stop and the support frame **207** will start rotating. The support frame **207** will rotate the number of turns the flexible element **202** is wrapped around it, such that the stiff module or other accessory **203** gets out on the other side as shown in Fig. 15d. The support frame **207** will now stop, and the sheaves **206** will continue to pay out the flexible element **202.**

Although the present invention is described above only in connection with the subsea laying of an elongate flexible element **2**, **102**, **202**, which has an accessory **3, 103, 203** integral with the element and forms therewith a section, for instance a substantially stiff section, that risks being damaged on passing from a generally horizontal/vertical orientation to a generally vertical/horizontal one, it is obvious the it also can be used in retrieving such an elongate flexible element **2**, **102**, **202** from the seabed.

### INDUSTRIAL APPLICABILITY

The method and the support structure of the present invention are applicable to eliminate the risk of damaging an elongate flexible element and/or an accessory integrated therein, such as a seismic cable having sensor modules distributed rather densely along the cable and forming therewith stiff sections that risk being damaged, on passing from a generally horizontal/vertical orientation to a generally vertical/horizontal one during subsea laying or retrieving of the cable.

## Claims

1. A method of preventing damage in an elongate flexible element (**2; 102; 202**) having an accessory (**3; 103; 203**) integral with the element and forming therewith a section that risks being damaged on passing from a generally horizontal/vertical orientation to a generally vertical/horizontal one during subsea laying or retrieving of the element (**2; 102; 202**), **characterized by**
a) providing a support structure (**5; 105; 205**) including at least four rotary sheaves (**6; 106; 206**) and a rotary support frame (**7; 107; 207**) for carrying the sheaves, and spacing said sheaves (**6; 106; 206**) equidistantly from the rotational axis of the rotary frame (**7; 107; 207**) and equiangularly from one another, said at least four sheaves (**6; 106; 206**) being spaced from each other a distance that is greater than a length of the accessory **(3; 103; 203)** to permit the element **(2; 102; 202**) with the integral accessory **(3; 103; 203) to** extend in a straight line between two of the four sheaves **(6; 106; 206),** each sheave **(6; 106; 206)** having a rotational axis (**6'**; **206**') that is substantially parallel to a rotational axis (**7**'; **207')** of the support frame **(7; 107; 207),**
b) feeding the element **(2; 102; 202) to** a position where it is carried by two of said at least four sheaves **(6; 106; 206)** and the integral accessory **(3; 103; 203)** is located between two of said four sheaves **(6; 106; 206);**
c) rotating the support frame **(7; 107**; **207)** a quarter of a full turn to make the accessory **(3; 103; 203)** change from a generally horizontal/vertical orientation to a generally vertical/horizontal one while maintaining the location of the accessory **(3; 103; 203)** between the sheaves **(6; 106; 206);** and
d) continuing feeding the element **(2; 102; 202)** to make the accessory **(3; 103; 203)** leave the position between the sheaves **(6; 106; 206),** whereby the accessory **(3; 103; 203)** and adjacent sections of the element **(2; 102; 202)** have changed their orientation frame a quarter of a full turn without having been exposed to damaging bends.

2. A method as claimed in claim 1, **characterized by** providing the sheaves **(6; 106)** with a circumferential groove **(12; 112)** fitting the element **(2; 102)** that engages the sheave **(6; 106).**

3. A method as claimed in claim 2, **characterized by** mounting the sheaves **(6; 106)** and the support frame **(7; 107)** to rotate freely, and providing a tensioning unit **(4)** to keep a desired tension in the element **(2; 102),** preferably by providing a locking system **(114)** for preventing the support frame **(7; 107)** from rotating when it should not.

4. A method as claimed in any one of claims 2 or 3, **characterized by** said sheaves **(106)** being roller-shaped and being preceded by and followed by additional roller-shaped sheaves **(106),** which together form an arcuate path for the element **(102),** said path having a radius of curvature that is of the same size as the radius of a single sheave **(6)** of larger diameter carried by the rotary support frame **(107)** would have.

5. A method as claimed in claim 1, **characterized by** providing the sheaves **(206)** with a circumferential groove **(212)** giving place for more than one single element **(202)** to engage the sheave **(206),** and providing motors **(227** and **226,** respectively) for driving the support frame **(207)** and all of the sheaves **(206),** preferably by providing a separate motor **(227** and **226,** respectively) for each of the support frame **(207)** and all of the sheaves **(206),** and more preferred **by** controlling the motors **(227, 226)** individually.

6. A method as claimed in any one of claims 4 or 5, **characterized by** providing a guiding system **(224)** for moving the element **(202)** on the circumference of the sheaves **(206)** from one side of the support frame **(207)** to the other as the sheaves **(206)** rotate, so as to permit the element **(202)** to extend more than one full turn around the support frame **(207)** while preventing the element **(202)** from getting tangled up at one side of the support frame **(207).**

7. A support structure **(5; 105; 205)** for an elongate flexible element **(2; 102; 202)** having an accessory **(3; 103; 203)** integral with the element **(2; 102; 202)** and forming therewith a section that risks being damaged on passing from a generally horizontal/vertical orientation to a generally vertical/horizontal one during subsea laying or retrieving of the element **(2; 102; 202**), **characterized in that** said support structure **(5; 105; 205)** comprises at least four rotary sheaves **(6; 106; 206)** and a rotary support frame **(7; 107; 207)** for carrying the sheaves **(6; 106; 206),** said sheaves **(6; 106; 206)** being equidistantly spaced from the rotational axis of the rotary frame **(7; 107; 207)** and equiangularly spaced from one another, said at least four sheaves **(6; 106; 206)** being spaced from each other a distance that is greater than a length of the accessory **(3; 103; 203)** to permit the element **(2; 102; 202)** with the integral accessory **(3; 103; 203)** to extend in a straight line between the two of the four sheaves **(6; 106; 206),** each sheave **(6; 106; 206)** having a rotational axis **(6'; 206')** that is substantially parallel to a rotational axis **(7'; 207')** of the support frame **(7; 107; 207),** and the support frame **(7; 107; 207)** being rotary at least between a position in which the accessory **(3; 103; 203)** with associated ends of the element **(2; 102; 202)** is located in a generally horizontal orientation and is supported by said sheaves **(6; 106; 206)** and a position in which the accessory **(3; 103; 203)** with associated ends of the element **(2; 102; 202)** is located in a generally vertical orientation during continuous support by said sheaves **(6; 106; 206),**

8. A support structure as claimed in claim 7, **characterized i n** that the sheaves **(6; 106)** have a circumferential groove **(12; 112)** fitting the element **(2; 102)** that engages the sheave **(6; 106),** preferably that the sheaves **(6; 106)** and the support frame **(7; 107)** can rotate freely, and more that a tensioning unit (in **4**) to keep a desired tension in the element **(2; 102)** is provided upstream of the support structure **(5; 105).**

9. A support structure as claimed in claim 8, **characterized in that** a locking system **(114)** is provided for preventing the support frame **(7; 107)** from rotating when it should not.

10. A support structure as claimed in claims 8, **characterized in that** said sheaves **(106)** are roller-shaped and are preceded by and followed by additional roller-shaped sheaves **(106),** which together form an arcuate path for the element **(102),** said path having a radius of curvature that is of the same size as the radius of a single sheave **(6)** of larger diameter carried by the rotary support frame **(107)** would have, if provided, preferably that a locking system (**114**) is provided for preventing the support frame **(107)** from rotating when it should not, said locking system **(114)** including a two-armed pivotal hook (**115**), a push-rod **(116),** a spring **(117)** and, a non-rotary cam wheel **(118),** the hook **(115)** having two ends, one of which is shaped for engagement with a forward end of the arriving generally horizontal integral accessory **(103),** the push rod **(116)** having one end pivotally connected to the other end of the hook **(115),** and the spring **(117)** being arranged to press the other end of the push-rod **(116)** against a cam surface provided on the cam wheel **(118),** so that upon engagement of the integral accessory **(103)** with the hook **(115),** the pulling force from the elongate flexible element **(102)** causes the rotary support frame **(107)** to rotate first an eighth of a full turn, thereby swinging the hook **(115)** out of engagement with the accessory **(103),** and then another eighth of a full turn to lock the support frame **(107)** against further rotation and permit the accessory **(103)** to leave the support frame **(107)** in a generally vertical direction.

11. A support structure as claimed in any one of claims 9-10, **characterized i n** that the sheaves **(206)** have a circumferential groove **(212)** giving place for more than one single element **(202)** to engage the sheave (206), and the support frame **(207)** and all of the sheaves **(206)** being motor driven, preferably that the support frame **(207)** and all of the sheaves **(206)** each have a separate motor **(227** and **226,** respectively).

12. A support structure as claimed in claim 11, **characterized in that** the motors **(227, 226)** are individually controlled.

13. A support structure as claimed in any one of claims 11-12, **characterized i n** that a guiding system **(224)** is provided for moving the element **(202)** on the circumference of the sheaves **(206)** from one side of the support frame **(207)** to the other as the sheaves **(206)** rotate, so as to permit the element **(202)** to extend more than one full turn around the support **frame (207)** while preventing the element **(202)** from getting tangled up at one side of the support frame **(207).**

## Patentansprüche

1. Verfahren zum Verhindern einer Beschädigung in einem länglichen flexiblen Element (2, 102, 202) mit einem Zubehör (3, 103, 203), das einstückig mit dem Element ist, und das damit einen Bereich bildet, bei dem eine Gefahr einer Beschädigung bei einem Übergang von einer allgemein horizontalen/vertikalen Ausrichtung zu einer allgemein vertikalen/horizontalen Ausrichtung während eines unterseeischen Verlegens oder Heraufholens des Elements (2, 102, 202) besteht,
**gekennzeichnet durch**
a) Bereitstellen einer Trägerstruktur (5, 105, 205) einschließlich mindestens vier drehbarer Rollen (6, 106, 206) und einem drehbaren Trägerrahmen (7, 107, 207), um die Rollen zu tragen und die Rollen (6, 106, 206) mit gleichem Abstand von der Drehachse des drehbaren Rahmens (7, 107, 207) und in einem gleichen Winkel voneinander zu beabstanden,
wobei die mindestens vier Rollen (6, 106, 206) voneinander mit einem Abstand beabstandet sind, der größer ist als eine Läge des Zubehörs (3, 103, 203), um es dem Element (2, 102, 202) mit dem einstückigen Zubehör (3, 103, 203) zu gestatten, sich in einer geraden Linie zwischen zwei der vier Rollen (6, 106, 206) zu erstrecken,
wobei jede Rolle (6, 106, 206) eine Drehachse (6`, 206') aufweist, die im Wesentlichen parallel zu einer Drehachse (7', 207') des Trägerrahmens (7, 107, 207) ist,
b) Zuführen des Elements (2, 102, 202) zu einer Stellung in der es **durch** zwei der mindestens vier Rollen (6, 106, 206) getragen wird, und wobei das einstückige Zubehör (3, 103, 203) zwischen zwei der vier Rollen (6, 106, 206) angeordnet ist;
c) Drehen des Trägerrahmens (7, 107, 207) um eine Viertelumdrehung, um das Zubehör (3, 103, 203) von einer allgemein horizontalen/vertikalen Ausrichtung in eine allgemein vertikale/horizontale Ausrichtung zu wechseln, wobei die Anordnung des Zubehörs (3, 103, 203) zwischen den Rollen (6, 106, 206) aufrechterhalten wird; und
d) Fortfahren, das Element (2, 102, 202) zuzuführen, um das Zubehör (3, 103, 203) dazu zu bringen, die Stellung zwischen den Rollen (6, 106, 206) zu verlassen, wodurch das Zubehör (3, 103, 203) und benachbarte Bereiche des Elements (2, 102, 202) ihren Ausrichtungsrahmen um eine Viertelumdrehung verändert haben, ohne dass sie beschädigenden Biegungen ausgesetzt waren.

2. Verfahren nach Anspruch 1, **gekennzeichnet durch** Versehen der Rollen (6, 106) mit einer umlaufenden Rille (12, 112), die zu dem Element (2, 102) passt, das mit der Rolle (6, 106) in Eingriff steht.

3. Verfahren nach Anspruch 2, **gekennzeichnet durch** Montieren der Rollen (6, 106) und des Trägerrahmens (7, 107), um frei drehbar zu sein, und Bereitstellen einer Spanneinheit (4), um eine gewünschte Spannung in dem Element (2, 102) zu halten, vorzugsweise **durch** Bereitstellen eines Sperrsystems (114), um zu verhindern, dass der Trägerrahmen (7, 107) sich dreht, wenn er das nicht soll.

4. Verfahren nach einem der Ansprüche 2 oder 3, **dadurch gekennzeichnet, dass** die Rollen (106) walzenförmig sind, und wobei zusätzliche walzenförmige Rollen (106) vorangestellt sind und nachfolgen, die zusammen einen gebogenen Pfad für das Element (102) bilden, wobei der Pfad einen Krümmungsradius aufweist, der von der gleichen Größe wie der Radius ist, den eine einzelne Rolle (6) eines größeren Durchmessers aufweisen würde, die durch den drehbaren Trägerrahmen (107) getragen wird.

5. Verfahren nach Anspruch 1, **gekennzeichnet durch**
Versehen der Rollen (206) mit einer umlaufenden Rille (212), die Platz bietet, damit mehr als ein einzelnes Element (202) mit der Rolle (206) in Eingriff stehen kann, und Bereitstellen von Motoren (227 bzw. 226), um den Trägerrahmen (207) und jede der Rollen (206) anzutreiben,
bevorzugt **durch** Bereitstellen jeweils eines separaten Motors (227 bzw. 226) für den Trägerrahmen (207) und jede der Rollen (206) und
weiter bevorzugt **durch** individuelles Steuern der Motoren (227, 226).

6. Verfahren nach einem der Ansprüche 4 oder 5, **gekennzeichnet durch** Bereitstellen eines Führungssystems (224), um das Element (202) auf dem Umfang der Rollen (206) von einer Seite des Trägerrahmens (207) zu der anderen zu bewegen, wenn sich die Rollen (206) drehen, um es so dem Element (202) zu gestatten, sich mehr als eine ganze Umdrehung um den Trägerrahmen (207) zu erstrecken, während verhindert wird, dass das Element (202) an einer Seite des Trägerrahmens (207) verwickelt wird.

7. Trägerstruktur (5, 105, 205) für ein längliches flexibles Element (2, 102, 202) mit einem Zubehör (3, 103, 203), das einstückig mit dem Element (2, 102, 202) ist und das damit einen Bereich bildet, bei dem eine Gefahr einer Beschädigung bei einem Übergang von einer allgemein horizontalen/vertikalen Ausrichtung zu einer allgemein vertikalen/horizontalen Ausrichtung während eines unterseeischen Verlegens oder Heraufholens des Elements (2, 102, 202) besteht,
**dadurch gekennzeichnet, dass**
die Trägerstruktur (5, 105, 205) mindestens vier drehbare Rollen (6, 106, 206) und einen drehbaren Trägerrahmen (7, 107, 207) umfasst, um die Rollen (6, 106, 206) zu tragen, wobei die Rollen (6, 106, 206) mit gleichem Abstand von der Drehachse des drehbaren Rahmens (7, 107, 207) und in einem gleichen Winkel zueinander beabstandet sind,
wobei die mindestens vier Rollen (6, 106, 206) voneinander mit einem Abstand beabstandet sind, der größer als eine Läge des Zubehörs (3, 103, 203), um es dem Element (2, 102, 202) mit dem einstückigen Zubehör (3, 103, 203) zu gestatten, sich in einer geraden Linie zwischen den zwei der vier Rollen (6, 106, 206) zu erstrecken, wobei jede Rolle (6, 106, 206) eine Drehachse (6`, 206') aufweist, die im Wesentlichen parallel zu einer Drehachse (7`, 207') des Trägerrahmens (7, 107, 207) ist, und
wobei der Trägerrahmen (7, 107, 207) zumindest zwischen einer Stellung, in der das Zubehör (3, 103, 203) mit zugehörigen Enden des Elements (2, 102, 202) in einer allgemein horizontalen Ausrichtung angeordnet ist und durch die Rollen (6, 106, 206) getragen wird, und einer Stellung gedreht werden kann, in der das Zubehör (3, 103, 203) mit zugehörigen Enden des Elements (2, 102, 202) in einer allgemein vertikalen Ausrichtung angeordnet ist, während es durchgehend von den Rollen (6, 106, 206) getragen wird.

8. Trägerstruktur nach Anspruch 7, **dadurch gekennzeichnet, dass** die Rollen (6, 106) eine umlaufende Rille (12, 112) aufweisen, die zu dem Element (2, 102) passt, das mit den Rollen (6, 106) in Eingriff steht, und wobei bevorzugt die Rollen (6, 106) und der Trägerrahmens (7, 107) frei drehbar sind, und dass weiter eine der Trägerstruktur (5, 105) vorgeschaltete Spanneinheit (4) bereitgestellt ist, um eine gewünschte Spannung in dem Element (2, 102) zu halten.

9. Trägerstruktur nach Anspruch 8, **dadurch gekennzeichnet, dass** ein Sperrsystem (114), bereitgestellt ist, um zu verhindern, dass der Trägerrahmen (7, 107) sich dreht, wenn er das nicht soll.

10. Trägerstruktur nach Anspruch 8, **dadurch gekennzeichnet, dass** die Rollen (106) walzenförmig sind, und wobei zusätzliche walzenförmige Rollen (106) vorangestellt sind und nachfolgen, die zusammen einen gebogenen Pfad für das Element (102) bilden, wobei der Pfad einen Krümmungsradius aufweist, der von der gleichen Größe ist wie der Radius, den eine einzelne Rolle (6) eines größeren Durchmessers aufweisen würde, die durch den drehbaren Trägerrahmen (107) getragen wird, falls sie bereitgestellt wäre, und
dass bevorzugt ein Sperrsystems (114) bereitgestellt ist, um zu verhindern, dass der Trägerrahmen (107) sich dreht, wenn er das nicht soll, wobei das Sperrsystem (114) einen zweiarmigen Schwenkhaken (115), eine Schubstange (116), eine Feder (117) und eine nicht-drehbare Nockenscheibe (118) einschließt,
wobei der Haken (115) zwei Enden aufweist, wobei das eine geformt ist, um mit einem vorderen Ende des ankommenden allgemein horizontalen einstückigen Zubehörs (103) in Eingriff zu treten,
wobei die Schubstange (116) mit einem Ende schwenkbar mit dem anderen Ende des Hakens (115) verbunden ist, und die Feder (117) eingerichtet ist, um das andere Ende der Schubstange (116) gegen eine Nockenfläche zu drücken, die auf der Nockenscheibe (118) bereitgestellt ist, sodass bei einem Eingriff des einstückigen Zubehörs (103) mit dem Haken (115) die Zugkraft des länglichen flexiblen Elements (102) bewirkt, dass der drehbare Trägerrahmen (107) um eine erste Achtelumdrehung dreht, wodurch der Haken aus dem Eingriff mit dem Zubehör (103) geschwenkt wird, und dann eine weitere Achtelumdrehung dreht, um den Trägerrahmen (107) gegen eine weitere Drehung zu sperren und es dem Zubehör (103) zu gestatten, den Trägerrahmen (107) in einer allgemein vertikalen Richtung zu verlassen.

11. Trägerstruktur nach einem der Ansprüche 9-10, **dadurch gekennzeichnet, dass** die Rollen (206) eine umlaufende Rille (212) aufweisen, die Platz bietet, damit mehr als ein einzelnes Element (202) mit der Rolle (206) in Eingriff stehen kann, und wobei der Trägerrahmen (207) und jede der Rollen (206) motorgetrieben sind,
wobei bevorzugt der Trägerrahmen (207) und jede der Rollen (206) jeweils einen separaten Motor (227 bzw. 226) aufweisen.

12. Trägerstruktur nach Anspruch 11, **dadurch gekennzeichnet, dass** die Motoren (227, 226) individuell gesteuert sind.

13. Trägerstruktur nach einem der Ansprüche 11-12, **dadurch gekennzeichnet, dass** ein Führungssystem (224) bereitgestellt ist, um das Element (202) auf dem Umfang der Rollen (206) von einer Seite des Trägerrahmens (207) zu der anderen zu bewegen, wenn sich die Rollen (206) drehen, um es so dem Element (202) zu gestatten, sich mehr als eine ganze Umdrehung um den Trägerrahmen (207) zu erstrecken, während verhindert wird, dass das Element (202) an einer Seite des Trägerrahmens (207) verwickelt wird.

## Revendications

1. Un procédé pour empêcher des dommages à un élément souple allongé (2 ; 102 ; 202) comportant un accessoire (3 ; 103 ; 203) solidaire de l'élément et formant avec celui-ci une portion qui risque d'être endommagée lors du passage d'une orientation généralement horizontale / verticale à une orientation généralement verticale / horizontale pendant la pose sous-marine ou la récupération sous-marine de l'élément (2 ; 102 ; 202), **caractérisé par** :
a) le fait d'utiliser d'une structure de support (5 ; 105 ; 205) comprenant au moins quatre poulies rotatives (6 ; 106 ; 206) et un châssis de support rotatif (7 ; 107 ; 207) pour supporter les poulies, avec un espacement équidistant desdites poulies (6 ; 106 ; 206) par rapport à l'axe du châssis tournant (7 ; 107 ; 207) et disposées selon des angles égaux les unes des autres, lesdites au moins quatre poulies (6 ; 106 ; 206) étant espacées les unes des autre d'une distance qui est supérieure à une longueur de l'accessoire (3 ; 103 ; 203) pour permettre à l'élément (2 ; 102 ; 202) avec l'accessoire (3 ; 103 ; 203) solidaire de lui de s'étendre en ligne droite entre deux des quatre poulies (6 ; 106 ; 206), chaque poulie (6 ; 106 ; 206) ayant un axe de rotation (6' ; 206') qui est sensiblement parallèle à un axe de rotation (7' ; 207') du châssis de support (7 ; 107 ; 207),
b) le fait d'introduire de l'élément (2 ; 102 ; 202) dans une position dans laquelle il est porté par deux desdites au moins quatre poulies (6 ; 106 ; 206) et dans laquelle l'accessoire (3 ; 103 ; 203) solidaire est situé entre deux desdites quatre poulies (6 ; 106 ; 206) ;
c) le fait de faire tourner le châssis de support (7 ; 107 ; 207) sur le quart d'un tour complet de manière que l'accessoire (3 ; 103 ; 203) passe d'une orientation généralement verticale / horizontale à une orientation généralement horizontale / verticale, tout en maintenant l'emplacement de l'accessoire (3 ; 103 ; 203) entre les poulies (6 ; 106 ; 206) ; et
d) le fait de poursuivre l'alimentation de l'élément (2 ; 102 ; 202) pour permettre à l'accessoire (3 ; 103 ; 203) de quitter la position entre les poulies (6 ; 106 ; 206), de sorte que l'accessoire (3 ; 103 ; 203) et les portions adjacentes de l'élément (2 ; 102 ; 202) ont changé leur orientation d'un quart de tour complet sans avoir été exposées à des courbures dommageables.

2. Un procédé selon la revendication 1, **caractérisé par** le fait de prévoir les poulies (6 ; 106) avec une gorge circonférentielle (12 ; 112) recevant de façon ajustée l'élément (2 ; 102) qui s'engage sur la poulie (6 ; 106).

3. Un procédé selon la revendication 2, **caractérisé par** le fait de monter les poulies (6 ; 106) et le châssis de support (7 ; 107) de telle sorte qu'ils tournent librement, et de prévoir une unité (4) mise en tension pour maintenir une tension désirée dans l'élément (2 ; 102), de préférence en prévoyant un système de verrouillage (114) pour empêcher le châssis de support (7 ; 107) de tourner lorsqu'il ne doit pas tourner.

4. Un procédé selon l'une quelconque des revendications 2 ou 3, **caractérisé en ce que** lesdites poulies (106) sont en forme de galet et sont précédées et suivies par des poulies supplémentaires (106) en forme de galet, qui forment conjointement un trajet en forme d'arc pour l'élément (102), ledit trajet ayant un rayon de courbure qui est de la même taille que le rayon qu'aurait une seule poulie (6) de plus grand diamètre portée par le châssis de support rotatif (107).

5. Un procédé selon la revendication 1, **caractérisé par** le fait de prévoir les poulies (206) avec une gorge circonférentielle (212) ayant de la place qui permet à plus d'un seul élément (202) de s'engager sur la poulie (206), et de prévoir des moteurs (227 et 226, respectivement) pour l'entraînement du châssis de support (207) et de toutes les poulies (206), de préférence en prévoyant un moteur séparé (227 et 226, respectivement) pour le châssis de support (207) et chacune des poulies (206), et de manière davantage préférée en commandant les moteurs (227, 226) individuellement.

6. Un procédé selon l'une quelconque des revendications 4 ou 5, **caractérisé par** le fait de prévoir un système de guidage (224) pour déplacer l'élément (202) sur la circonférence des poulies (206) depuis un côté du châssis de support (207) vers l'autre côté lorsque les poulies (206) tournent, de manière à permettre à l'élément (202) de s'étendre sur plus d'un tour complet autour du châssis de support (207) tout en empêchant l'élément (202) de s'emmêler sur un côté du châssis de support (207).

7. Une structure de support (5 ; 105 ; 205) pour un élément flexible allongé (2 ; 102 ; 202) comportant un accessoire (3 ; 103 ; 203) solidaire de l'élément (2 ; 102 ; 202) et formant avec celui-ci une portion qui risque d'être endommagée lors du passage d'une orientation généralement verticale / horizontale à une orientation généralement horizontale / verticale pendant la pose sous-marine ou la récupération sous-marine de l'élément (2 ; 102 ; 202), **caractérisée en ce que** ladite structure de support (5 ; 105 ; 205) comprend au moins quatre poulies rotatives (6 ; 106 ; 206) et un châssis de support rotatif (7 ; 107 ; 207) pour porter les poulies (6 ; 106 ; 206), lesdites poulies (6 ; 106 ; 206) étant espacées de façon équidistante par rapport à l'axe de rotation du châssis tournant (7 ; 107 ; 207) et disposées selon des angles égaux les unes des autres, lesdites au moins quatre poulies (6 ; 106 ; 206) étant espacées les unes des autres selon une distance qui est supérieure à une longueur de l'accessoire (3 ; 103 ; 203) pour permettre à l'élément (2 ; 102 ; 202) avec l'accessoire (3 ; 103 ; 203) solidaire de lui de s'étendre en ligne droite entre deux des quatre poulies (6 ; 106 ; 206), chaque poulie (6 ; 106 ; 206) ayant un axe de rotation (6' ; 206') qui est sensiblement parallèle à un axe de rotation (7' ; 207') du châssis de support (7 ; 107 ; 207), et le châssis de support (7 ; 107 ; 207) étant rotatif au moins entre une position dans laquelle l'accessoire (3 ; 103 ; 203) avec les extrémités associées de l'élément (2 ; 102 ; 202) se trouve placé selon une orientation généralement horizontale et est supporté par lesdites poulies (6 ; 10 ; 206) et une position dans laquelle l'accessoire (3 ; 103 ; 203) avec les extrémités associées de l'élément (2 ; 102 ; 202) se trouve placé selon une orientation généralement verticale pendant le support continu opéré par lesdites poulies (6 ; 106 ; 206).

8. Une structure de support selon la revendication 7, **caractérisée en ce que** les poulies (6 ; 106) présentent une gorge circonférentielle (12 ; 112) recevant de façon ajustée l'élément (2 ; 102) qui s'engage sur la poulie (6 ; 106), de préférence **en ce que** les poulies (6 ; 106) et le châssis de support (7 ; 107) peuvent tourner librement, et de manière encore préférée, **en ce qu'**une unité de mise sous tension (en 4) est prévue afin de maintenir une tension souhaitée sur l'élément (2, 102) en amont de la structure de support (5 ; 105).

9. Une structure de support selon la revendication 8, **caractérisée en ce qu'**un système de verrouillage (114) est prévu pour empêcher le châssis de support (7 ; 107) de tourner quand il ne doit pas tourner.

10. Une structure de support selon la revendication 8, **caractérisée en ce que** lesdites poulies (106) sont en forme de galets et sont précédées et suivies par des poulies supplémentaires (106) en forme de galets, qui forment conjointement un trajet en forme d'arc pour l'élément (102), ledit trajet ayant un rayon de courbure qui est de la même taille que le rayon qu'aurait une seule poulie (6) de plus grand diamètre portée par le châssis de support rotatif (107), si elle était prévue, de préférence **en ce qu'**un système de verrouillage (114) est prévu pour empêcher le châssis de support (107) de tourner lorsqu'il ne doit pas tourner, ledit système de verrouillage (114) comprenant un crochet pivotant (115) à deux bras, une tige de poussée (116), un ressort (117) et une roue non rotative (118) formant came, le crochet (115) ayant deux extrémités, dont l'une est aménagée de manière à venir en prise avec une extrémité avant de l'accessoire solidaire (103) arrivant en une position généralement horizontale, la tige de poussée (116) ayant une extrémité reliée de façon pivotante à l'autre extrémité du crochet (115), et le ressort (117) étant agencé pour presser l'autre extrémité de la tige de poussée (116) contre une surface formant came aménagée sur la roue (118) formant came, de sorte que lors de l'engagement de l'accessoire solidaire (103) avec le crochet (115), la force de traction de l'élément flexible allongé (102) amène le châssis de support rotatif (107) à tourner d'abord d'un huitième de tour complet, faisant de ce fait pivoter le crochet (115) en une position hors d'engagement avec l'accessoire (103), et ensuite d'un autre huitième de tour complet pour verrouiller le châssis de support (107) à l'égard d'une rotation supplémentaire et pour permettre à l'accessoire (103) de quitter le châssis de support (107) selon une direction généralement verticale.

11. Une structure de support selon l'une quelconque des revendications 9 à 10, **caractérisée en ce que** les poulies (206) ont une gorge circonférentielle (212) ayant de la place qui permet à plus d'un seul élément (202) de s'engager sur la poulie, et **en ce que** le châssis de support (207) et toutes les poulies (206) sont entraînées par un moteur, de préférence **en ce que** le châssis de support (207) et toutes les poulies (206) ont chacun un moteur séparé (227 et 226, respectivement).

12. Une structure de support selon la revendication 11, **caractérisée en ce que** les moteurs (227, 226) sont commandés individuellement.

13. Une structure de support selon l'une quelconque des revendications 11 à 12, **caractérisée en ce qu'**un système de guidage (224) est prévu pour déplacer l'élément (202) sur la circonférence des poulies (206) depuis un côté du châssis de support (207) vers l'autre lorsque les poulies (206) tournent, de manière à permettre à l'élément (202) de s'étendre sur plus d'un tour complet autour du châssis de support (207) tout en empêchant l'élément (202) de s'emmêler sur un côté du châssis.
